**Europäisches Patentamt**

**European Patent Office**

**Office européen des brevets**

(11) Veröffentlichungsnummer: **0 201 029 B1**

# EUROPÄISCHE PATENTSCHRIFT

(45) Veröffentlichungstag der Patentschrift: **08.05.91**

(21) Anmeldenummer: **86105897.2**

(22) Anmeldetag: **29.04.86**

(51) Int. Cl.⁵: **B29C 67/24**, B29C 43/00, B29C 71/00

(54) Verfahren zur Herstellung von Formkörpern und Folien aus thermotropen Polymeren.

(30) Priorität: **08.05.85 DE 3516425**

(43) Veröffentlichungstag der Anmeldung:
**12.11.86 Patentblatt 86/46**

(45) Bekanntmachung des Hinweises auf die
Patenterteilung:
**08.05.91 Patentblatt 91/19**

(84) Benannte Vertragsstaaten:
**DE FR GB IT**

(56) Entgegenhaltungen:
**EP-A- 0 084 456**
**EP-A- 0 116 845**
**FR-A- 2 279 875**

(73) Patentinhaber: **BAYER AG**

**W-5090 Leverkusen 1 Bayerwerk(DE)**

(72) Erfinder: **Willenberg, Bernd, Dr.**
**Feldstrasse 94**
**W-5060 Bergisch Gladbach 2(DE)**
Erfinder: **El Sayed, Aziz, Dr.**
**Saarlauterner Strasse 39**
**W-5090 Leverkusen 1(DE)**
Erfinder: **Röhr, Harry, Dr.**
**Zur Ville 21**
**W-5020 Frechen 4(DE)**
Erfinder: **Dicke, Hans-Rudolf, Dr.**
**Bodelschwinghstrasse 16**
**W-4150 Krefeld 1(DE)**

**Beschreibung**

Die Erfindung betrifft die Herstellung von Formkörpern, wie z.B. von Platten, Rohren, Gehäuseteilen, sowie von Folien mit hervorragenden mechanischen Eigenschaften aus thermotropen Polymeren durch Erhitzen und Druck; die Erfindung betrifft auch die nach diesem Verfahren hergestellten Formkörper und Folien.

Als "thermotrop" bezeichnet man solche Substanzen, die flüssig-kristalline Schmelzen bilden. Thermotrope Polymere sind hinreichend bekannt, vergleiche z.B. F.E. Mc Farlane et al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymer Chem. Ed. 14, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, S. 1-19 (1982);

A. Cifferri, W. R. Krigbaum, R. B. Meyer "Polymer Liquid Crystals", Academic Press, New York, 1982;

P. J. Flory, I. Uematsu, S. P. Papkov, CH. Ober und R. W. Lenz, Advances in Polymer Science 59 (1984);

B. Wunderlich, J. Grebowicz, M. G. Dobb. J. Mc Intyre, H. Finkelmann, G. Rehage, V. P. Shibaev und N. Plate, Advances in Polymer Science 60/61 (1984);

EP 1185, 1340, 8855, 11 640, 15 856, 17 310, 18 145, 18 709, 22 344, 44 205, 49 615;

US 3 991 013, 3 991 014, 4 066 620, 4 067 852, 4 083 829, 4 107 143;

WO 79/797, 79/1034, 79/1040.

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polymerschmelzen betrug 100 μm.

Die Untersuchung der Polymeren erfolgte nach dem Aufschmelzen der Proben bei Temperaturen zwischen 200 und 400° C. Sofern in diesem gesamten Bereich oder in einem Teil davon eine Aufhellung der zwischen den gekreuzten Nicolschen Prismen beobachteten Schmelze auftrat, wurde das Polymere als thermotrop flüssigkristallin eingestuft.

Die flüssig-kristallinen Polymeren zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Thermotrope Polymere lassen sich z.B. auf Extrudern und Spritzgußmaschinen ohne Schwierigkeiten verarbeiten, sofern sie einen genügend niedrigen Erweichungspunkt besitzen.

Während dieser Verarbeitung orientieren sich die "flüssig-kristallinen" Segmente des Polymeren vorzugsweise in Verarbeitungsrichtung. Dabei beeinflussen Verarbeitungsparameter, wie z.B. Verarbeitungstemperatur, Schneckendrehzahl, Düsenkonstruktion, Scherströmung und Dehnströmung, den Orientierungsgrad und damit die Anisotropie der mechanischen Eigenschaften: Während in Verarbeitungsrichtung die mechanischen Eigenschaften auf sehr hohem Niveau liegen, ist dies quer zur Verarbeitungsrichtung nicht der Fall. Dies gilt auch quantitativ: Je höher der Orientierungsgrad, desto besser sind die mechanischen Eigenschaften in der Orientierungsrichtung und desto schlechter quer dazu.

Somit bestanden verschiedene Probleme: Zum einen wird z.B. beim Spritzguß während des Füllens der Form der Orientierungsgrad erniedrigt, so daß das Spritzgußteil nicht den bestmöglichen Orientierungsgrad der "flüssig-kristallinen" Segmente aufweist; zum anderen war es ein Nachteil, daß man - falls erwünscht - die Anisotropie nicht ohne weiteres unterdrücken konnte.

Um Platten mit hoch-anisotropen Eigenschaften in einer Vorzugsrichtung herzustellen, kann man gereckte Folien aus thermotropen Polymeren so aufeinanderschichten und bei erhöhter Temperatur verpressen, daß im Endprodukt ebenfalls eine unidirektionale Orientierung erhalten wird (DE-OS 3 329 341). Mit steigender Anzahl der verwendeten Folien erschwert sich jedoch deren Handhabung (Faltenbildung, Lufteinschlüsse).

Um die Anisotropie von Folien aus thermotropen voll-aromatischen Polyestern zu vermeiden, ist vorgeschlagen worden, die Folien biaxial zu verstrecken, bevor die Temperatur unter die Glasübergangstemperatur des Polyesters abgekühlt ist (EP-A 24 499). Nach einem anderen Vorschlag wird die Anisotropie teilweise dadurch vermieden, daß man maximal verstreckte Schichten thermotroper Polymerer, z.B. vollaromatischer Polyester, in mindestens zwei Lagen mit einem Winkel zwischen 30 und 90° übereinanderlegt und unter Hitzeeinwirkung zusammenpreßt (EP-A 72 219). Nach beiden Verfahren werden die mechanischen Eigenschaften längs und quer zur Verarbeitungsrichtung auf ein ähnliches oder gleiches Niveau gebracht, welches zwischen denen von einaxial orientierten Formteilen längs und quer zur Verarbeitungsrichtung liegt. Damit werden also die hervorragenden Eigenschaften in Verarbeitungsrichtung teilweise eingebüßt.

Aufgabe der Erfindung war es daher, eine Methode zur Herstellung von Folien und Formkörpern - vorzugsweise Formkörpern aus Flächengebilden - aus thermotropen Polymeren mit hervorragenden Eigenschaften in beliebig zu wählenden Richtungen bereitzustellen.

Fasern aus thermotropen Polymeren besitzen aufgrund einer optimalen Orientierung der "flüssig-kristallinen" Molekülsegmente außerordentlich gute mechanische Eigenschaften, doch wurden sie in der Praxis außerhalb des Fasersektors zur Herstellung von Formkörpern aus Flächengebilden unseres Wissens nur bei der Verfestigung von Vliesen durch Pressen bei erhöhter Temperatur eingesetzt, wobei die Fasern im wesentlichen nicht deformiert, sondern lediglich an den Berührungspunkten der einzelnen Fasern verklebt wurden (US-PS 4 362 777). Ein Aufschmelzen der Fasern soll dabei vermieden werden, so daß demzufolge die Dichte der so erzeugten Vliesen deutlich unter der von homogenen, blasen- und porenfreier Formkörper liegt.

Auch aus Fasern thermotroper Polymerer und aus Verstärkungsfasern, wie z.B. Kohlenstoffasern, sind schon Flächengebilde hergestellt worden (US-PS 4 479 999). Die mechanischen Eigenschaften, wie z.B. die Reißfestigkeit, der unter relativ niedrigem Druck erzeugten Flächengebilde werden maßgeblich durch die Eigenschaften der Verstärkungsfasern bestimmt, während nicht ersichtlich ist, daß die thermotropen Polymeren irgendeinen Betrag von Bedeutung dazu leisten würden.

Gegenstand der Erfindung ist ein Verfahren zur Herstellung von Folien und Formkörpern, daß dadurch gekennzeichnet ist, daß man Fasern oder Filamente aus thermotropen Polymeren zu einem Flächengebilde anordnet und dieses bei Temperaturen von 200- 400° C und einem Durck von 1,2-1500 bar aus anisotroper Schmelze kompaktiert, wobei die Verarbeitungszeit so gewählt wird, daß ein homogenes, von inneren Oberflächen freies Produkt entsteht.

Der Durchmesser der zu verwendenden Fasern und Filamente kann 1 bis 100, vorzugsweise 5 bis 50, insbesondere 10 bis 30 $\mu$m, die Länge 1 mm bis endlos, vorzugsweise 10 mm bis endlos und insbesondere 50 mm bis endlos betragen.

Weitere bevorzugh Ausführungsformen sind in den Ansprücher 2 bis 9 definiert.

Die Dicke der herzustellenden Folien und Formkörper kann 50 $\mu$m bis 5 cm, vorzugsweise 0,1 mm bis 1,5 cm und insbesondere 2 bis 10 mm betragen. Die Dicke der zu kompaktierenden Flächengebilde richtet sich nach deren Dichte und nach der Dicke der herzustellenden Folien und Formkörper und läßt sich ohne Schwierigkeit durch wenige Versuche ermitteln oder durch Vergleich der Dichten von Flächengebilden (vor dem Kompaktieren) und Folie bzw. Formkörper (nach dem Kompaktieren) errechnen.

Als zu kompaktierende Flächengebilde kommen Gelege von Fasern, Gewebe, Vliese und Maschenware, oder Filamente in Frage. Die Anordnung erfolgt dabei so, wie es in den herzustellenden Folien oder Formkörpern gewünschten Orientierungsverteilung der Eigenschaften, wie etwa des Elastizitätsmoduls, entspricht:

Will man z.B. eine Platte mit gleichen Elastizitätsmoduli in Längs- und Querrichtung herstellen, wird man die Fasern oder Filamente zur Kompaktierung so vorlegen, daß sich im Mittel gleich viele Fasern bzw. Filamente in Längs- und Querrichtung befinden. Dies kann z.B. dadurch geschehen, daß man gleich viele parallele Fasern oder Filamente in Längs- und Querrichtung vorlegt. Bevorzugt wird man jedoch aus den Fasern oder Filamenten Gelege, Gewebe, Vliese, oder Maschenware herstellen, wobei die Orientierungsverteilung der Fasern bzw. Filamente in dem Flächengebilde oder, wenn mehrere Flächengebilde vorgelegt werden, in der Summe der vorgelegten Flächengebilde der gewünschten Orientierungsverteilung bestimmter Eigenschaften, wie z.B. des Elastizitätsmoduls, entspricht.

Im Falle einer herzustellenden Platte, die in Längs- und Querrichtung den gleichen Elastizitätsmodul aufweisen soll, kann man beispielsweise zwei eindimensional orientierte Vliese, die um 90° gegeneinander verdreht sind, oder ein gleichmäßig längs- und querorientiertes Kreuzlagenvlies oder ein Gewebe mit gleich vielen Filamenten in Kette und Schuß vorlegen, wobei die Elastizitätsmoduli von Kette- und Schußfäden natürlich gleich zu sein haben.

Will man eine Platte herstellen, die in Querrichtung einen doppelt so hohen Elastitzitätsmodul wie in Längsrichtung hat, kann man ein Flächengebilde, das in Querrichtung doppelt so viele Fasern oder Filamente gleichen Elastizitätsmoduls wie in Längsrichtung enthält, oder ein Flächengebilde, welches in Längs- und Querrichtung gleich viele Fasern oder Filamente enthält, die in Querrichtung befindlichen Fasern aber einen doppelt so hohen Elastitzitätsmodul aufweisen, kompaktieren.

Entsprechendes gilt für Folien und Formkörper mit komplizierter Orientierungsverteilung der Eigenschaften. Stets soll die Orientierungsverteilung der Fasern oder Filamente im vorgelegten Flächengebilde der Orientierungsverteilung der gewünschten Eigenschaften in den herzustellenden Folien oder Formkörpern entsprechen.

Für das erfindungsgemäße Verfahren werden Flächengebilde mit hoher Dichte bzw. hohem Flächengewicht bevorzugt, weil sie den Preßvorgang erleichtern. Viele thermotrope Polymere besitzen eine Dichte von ca. 1.40 g/cm$^3$. Für die Herstellung von Folien oder Platten wird demnach pro 0,1 mm Dicke ein Flächengewicht von 140 g/m$^2$ des Flächengebildes benötigt.

Die Verarbeitungsbedingungen sind so zu wählen, daß der Übergang der anisotropen Schmelze in den isotropen Zustand vermieden wird. Die Verarbeitung erfolgt vorzugsweise bei 30 bis 1500 bar, insbesondere bei 50 bis 600 bar. Die Verarbeitungstemperatur liegt bei 200 bis 400, vorzugsweise 250 bis 360, insbesondere 280 bis 340 °C, stets jedoch im Bereich der anisotropen Schmelze, wobei deren Existenzbereich durch das im Eingang beschriebene optische Verfahren bestimmt wird. Die Verarbeitung unter Druck kann diskontinuierlich, z.B. in einer Presse, oder kontinuierlich, z.B. in einem Kalander, erfolgen.

Die Verarbeitungsbedingungen sind dabei so zu wählen, daß homogene, vorzugsweise porenfreie Folien und Formkörper entstehen. Bei der Wahl der Parameter Temperatur, Druck und Preßzeit sollte beachtet werden, daß

1. die im Flächengebilde enthaltene Luft vollständig entweichen kann, damit lunkerfreie Produkte erhalten werden; die Dichte der erhaltenen Produkte ist dann gleich der Dichte der reinen thermotropen Polymeren, was zur Prüfung der Frage, ob lunkerfreie Produkte entstanden sind, herangezogen werden kann. Auf einfache Weise kann die Luft in einem evakuierbaren Preßwerkzeug entfernt werden. Nach einer bevorzugten Ausführungsform unterwirft man das Flächengebilde vor dem erfindungsgemäßen Verfahren einem Kompaktierprozeß unterhalb des Schmelzpunktes der thermotropen Fasern oder Filamente, so daß die Hohlräume zwischen den Fasern oder Filamenten schon in diesem Schritt weitgehend beseitigt werden und die Gefahr des Lufteinschlusess während des erfindungsgemäßen Verfahrens weiter verringert wird;

2. die Verarbeitungstemperatur so weit oberhalb des Schmelzpunktes der thermotropen Fasern und Filamente gewählt wird, daß sich die Schmelze unter den Verarbeitungsbedingungen zu einem von inneren Grenzflächen freien Produkt verformt. Es ist selbstverständlich, daß Temperaturen, bei denen sich die thermotropen Polymeren zersetzen bzw. die oberhalb des Existenzbereiches der anisotropen Schmelze liegen, vermieden werden; analoges gilt für Temperaturen, bei denen die Schmelze aufgrund ihrer niedrigen Viskosität aus dem Werkzeug herausgepreßt wird;

3. der Preßdruck so gewählt wird, daß unter Verarbeitungsbedingungen die Struktur der thermotropen Fasern und Filamente vollständig verschwindet, so daß das thermotrope Polymere eine homogene Matrix bildet. So lassen sich beispielsweise thermotrope Fasern mit einem Schmelzpunkt von 210 °C bei 240 °C bei einem Druck von 500 bar zu einer homogenen, porenfreien Platte verpressen, während für das gleiche Material bei einer Preßtemperatur von 295 °C ein Druck von etwa 1,2 bar genügt;

4. die Verarbeitungszeit so gewählt wird, daß unter Verarbeitungsbedingungen ein homogenes, von inneren Grenzflächen freies Produkt entsteht. Dabei ist die Zeit desto länger, je dicker das herzustellende Produkt ist, je näher die Verarbeitungstemperatur am Schmelzpunkt liegt und je niedriger der Preßdruck gewählt wird. Man wird möglichst niedrige Verarbeitungszeiten anstreben, um die thermische Belastung des Polymeren gering zu halten.

Die homogene, porenfreie und von inneren Oberflächen freie Beschaffenheit eines erfindungsgemäßen Formkörpers läßt sich vorzugsweise dadurch überprüfen, daß von dem Formkörper ein Dünnschnitt bzw. Dünnschliff hergestellt wird, der einer Untersuchung mit einem Lichtmikroskop unterzogen wird. Bei einem erfindungsgemäß hergestellten Formkörper darf keine Faserstruktur mehr erkennbar sein, ebensowenig wie Hohlräume, Risse oder Spalte.

Eine Struktur darf bei der Untersuchung mit polarisiertem Licht zwischen Nicolschen Prismen nur dann sichtbar sein, wenn sich Schichten unterschiedlicher Orientierung zeigen, wie sie sich aufgrund der Orientierungsverteilung des dem Kompaktiervorgang vorgelegten Flächengebildes einstellen; sie unterscheiden sich durch unterschiedliche Doppelbrechung.

In jedem Fall sind die Verarbeitungsbedingungen so zu wählen, daß Scher- und Dehnströmungen innerhalb der Schmelze vermieden werden, soweit sie zu einer Desorientierung wesentlichen Umfangs führen würden. Eine Desorientierung "wesentlichen Umfangs" liegt dann vor, wenn die mittels Röntgenweitwinkelstreuung bestimmte Orientierung bezüglich einer oder mehrerer Vorzugsrichtung(en) im erfindungsgemäß hergestellten Produkt um mehr als 10% niedriger als im der Kompatierung vorgelegten Flächengebilde aus Fasern oder Filamenten bezüglich der gleichen Vorzugsrichtung(en) liegt. Dabei wird die Orientierung nach einem von L.E. Alexander, "X-ray Diffraction Methods in Polymer Science", Wiley Interscience, New York 1969, beschriebenen Verfahren als Halbwertsbreite der azimutalen Intensitätsverteilung definiert.

Mit anderen Worten: Entspricht die so erhaltene "Orientierung" des Flächengebildes in Bezug auf interessierende Vorzugsrichtungen in etwa der "Orientierung" in Bezug auf die gleiche Vorzugsrichtung des erfindungsgemäß hergestellten Produkts, so wird davon ausgegangen, daß Scher- und Dehnströmungen in störendem Umfang vermieden worden sind. Wenn gemäß Beispiel 1 die Orientierung im Flächengebilde 0,044, in der daraus hergestellten Folie 0,043 beträgt, bedeutet dies, daß eine wesentliche Desorientierung nicht stattgefunden hat. Die oben unter 1) beschriebene Ausführungsform des vorgeschalteten Kompaktierens des Flächengebildes unterhalb des Schmelzpunktes des thermotropen Polymeren ist ein bevorzugtes Verfahren, die Desorientierung gering zu halten, weil die Hohlräume zwischen den Fasern bzw. Filamenten weitgehend beseitigt werden, bevor das thermotrope Polymere schmilzt. Durch diese Verfahrensweise können Fließvorgänge in der Schmelze, die zu Desorientierungen führen können, weitestgehend vermieden werden.

Diese bevorzugte Ausführungsform des "Vorkompaktierens" kann beispielsweise 10 bis 100, vorzugsweise 10 bis 50, °C unterhalb des Schmelzpunktes der thermotropen Fasern bzw. Filamente unter einem Druck von 10 bis 500 bar innerhalb von 10 bis 1000 sec. erfolgen. Im Anschluß daran kann unter Aufrechterhaltung des Druckes das Preßwerkzeug auf eine Temperatur von 10 bis 100, vorzugsweise 20 bis 50 °C, über dem Schmelzpunkt der thermotropen Fasern bzw. Filamente aufgeheizt und diese Temperatur je nach Dicke des Preßlings vorzugsweise 10 bis 1000 sec. aufrechterhalten bleibt. Anschließend kann entformt werden.

Vorkompaktieren und Kompaktieren können aber auch in zwei voneinander getrennten Verfahrensschritten durchgeführt werden.

Eine kontinuierliche Variante der besonders bevorzugten Kombination Vorkompaktieren unterhalb des Schmelzpunktes/ Kompaktieren oberhalb des Schmelzpunktes kann beispielsweise unter Benutzung eines mehrstufigen Kalanders erfolgen, wobei die Vorkompaktierung des vorgelegten Flächengebildes zwischen Kalanderwalzen unterhalb des Schmelzpunktes der thermotropen Fasern bzw. Filamente und das erfindungsgemäße Verschmelzen zwischen Kalanderwalzen oberhalb des Schmelzpunkts der thermotropen Fasern bzw. Filamente erfolgt.

Die Beachtung exakt gleicher Oberflächengeschwindigkeiten und des Parallellaufs aller Kalanderwalzen trägt dazu bei, unerwünschte Dehn- und Scherströmungen zu vermeiden. Durch das Begrenzen von Spaltlast und Temperatur kann ein Breitquetschen der Schmelze weitgehend unterbunden werden.

Geeignete thermotrope Polymere, die in Form von Fasern oder Filamenten zur Verwendung in dem erfindungsgemäßen Verfahren geeignet sind, umfassen thermotrope Polyester, Polyestercarbonate, Polyesteramide, Polyesterimide, Polythiolester, Polyazomethine und thermotrope Cellulosederivate wie beispielsweise Hydroxypropylcellulose.

Die Fasern und Filamente können vor der Verarbeitung zu Flächengebilden z.B. gemäß US 4,424,184 bzw. 4,183,895, getempert werden (Festphasennachkondensation), um die textilen Daten zu verbessern. Der Temperprozeß kann aber auch an den aus den Fasern bzw. Filamenten hergestellten Flächengebilden durchgeführt oder mit dem erfindungsgemäßen Verfahren kombiniert werden.

Ebenso ist eine thermische Nachbehandlung der durch Kompaktieren bereits fertigen Folie bzw. Formkörper möglich.

Für das erfindungsgemäße Verfahren können auch Flächengebilde aus unterschiedlichen Fasern oder Filamenten oder aus Mischfasern oder -filamenten verwendet werden, wobei für den Fall, daß diese nichtthermotrope Fasern oder Filamente umfassen, der thermotrope Anteil mindestens 30, vorzugsweise mindestens 50 Gew.-%, bezogen auf Summe der Fasern bzw. Filamente, betragen soll.

Es ist erfindungsgemäß auch zugelassen, daß eine Faser- oder Filamentkomponente einen höheren Schmelzpunkt als die andere Faser- oder Filamentkomponente besitzt, und es ist sogar auch möglich, das erfindungsgemäße Verfahren so auszuführen, daß nur der Schmelzpunkt der niedriger schmelzenden Komponente überschritten wird. Immer wird es sich bei der niedriger schmelzenden Komponente um ein thermotropes Polymer handeln. Mit anderen Worten: Stets wird der Schmelzpunkt mindestens einer Faser aus einem thermotropen Polymeren beim erfindungsgemäßen Verfahren überschritten.

Bevorzugte Beispiele hoch- bzw. nichtschmelzender Faser- bzw. Filament-Zweitkomponenten umfassen sehr hochschmelzende thermotrope Polymere, lyotrope Polymere wie beispielsweise Aramide, aber auch übliche Versträkungsfasern, wie z.B. Kohlenstoffasern, Metallfasern wie Stahl-, Aluminium- und Kupferfasern, und Glasfasern. Erfindungsgemäß hergestellte Formkörper und Folien können auch Füllstoffe, Pigmente und Hilfsmittel in üblichen Mengen enthalten.

Die nach dem erfindungsgemäßen Verfahren hergestellten Folien und Formkörper besitzen außergewöhnliche Eigenschaften, wie hohen Elastizitätsmodul, hohe Zähigkeit und außerdem hervorragende Dimensionsstabilität. Die Orientierungsverteilung dieser Eigenschaften wird dabei durch die Orientierungsverteilung der Fasern in den der Kompaktierung vorgelegten Flachengebilden bestimmt. So ist es beispielsweise möglich, Folien mit gleichem Elastizitätsmodul in Längs- und Querrichtung herzustellen.

Zur Verbesserung der Eigenschaften können natürlich auch die erfindungsgemäß hergestellten Folien und Formkörper getempert werden.

Aus den erfindungsgemäß hergestellten Folien und Platten können durch übliches Thermoformen Formteile mit sehr hohen mechanischen Eigenschaften hergestellt werden. Sie finden überall dort Verwendung, wo bisher Langfaser- verstärkte Verbundmaterialien eingesetzt worden sind, z.B. für Platten, Rohre, Gehäuseteile, Bootsrümpfe, Skier, vor allem aber für leichte, hochfeste, hochsteife Teile, wie sie im Fahrzeugbau benötigt werden.

Ihr Vorteil gegenüber den Verbundmaterialien des Standes der Technik ist darin zu sehen, daß sie bereits in unverstärkter Form die Eigenschaften der Verbundmaterialien des Standes der Technik erreichen oder übertreffen können. Daß dadurch die Probleme der Haftung zwischen Verstärkungsfaser und Harzmatrix gar nicht auftreten können, stellt einen beträchtlichen technologischen Vorteil dar.

Die unter Mitverwendung von elektrisch leitfähigen Fasern, z.B. in Form von Gelegen, Vliesen, Geweben oder Maschenware, erfindungsgemäß hergestellten Folien und Formkörper eignen sich z.B. für leichte, hochfeste Gehäuseteile mit abschirmender Wirkung gegen elektromagnetische Strahlung.

Beispiele

In einen beheizbaren 25 l-Kessel aus V4A-Stahl mit Rührer, Stickstoffleitung und Destillationsaufsatz wurden die folgenden Substanzen eingefüllt:

```
31,2 Mol = 4309 g p-Hydroxybenzoesäure,
14,4 Mol = 2392 g Isophthalsäure,
 2,4 Mol =  399 g Terephthalsäure,
14,4 Mol = 1586 g Hydrochinon,
 2,4 Mol =  447 g 4,4'-Dihydroxydiphenyl,
76,8 Mol = 7841 g Acetanhydrid,
    5 g Magnesiumacetat und
    2 g Germaniumdioxid.
```

Nach dreimaligem Evakuieren und anschließendem Belüften mit Stickstoff wurde der Kessel auf 170°C aufgeheizt. Dabei wurde Stickstoff mit einer Durchflußgeschwindigkeit von 20 l/h übergeleitet. Nach 2,5 Stunden bei 170°C wurde die Temperatur innerhalb von 30 Minuten auf 200°C, anschließend innerhalb von 1,5 Stunden auf 250°C, dann innerhalb von 1,5 Stunden weiter auf 300°C erhöht. Bei 300°C wurde zunächst ca. 1 Stunde bei Normaldruck gehalten und dann der Druck im Verlauf von 1,5 Stunden bis auf 20 mbar erniedrigt. Der Kessel wurde mit Stickstoff belüftet, das Produkt durch ein Bodenventil herausgedrückt und granuliert.

Der erhaltene Polyester besaß eine inhärente Viskosität von 0,75 dl/g, gemessen an einer Probe von 0,5 g Polyester in 100 ml p-Chlorphenol bei 45 °C.

Oberhalb 235 °C bis zur Zersetzungstemperatur wurde eine anisotrope Schmelze beobachtet. Der Polyester wurde mit einem Spinnextruder bei einer Schnecken- und Düsentemperatur von 335 °C durch eine Düse mit 30 Löchern (Lochdurchmesser 0,25 mm, Kanallänge 0,5 mm) versponnen. Die Abzugsgeschwindigkeit betrug 250 m/Minute. Das so erhaltene Filamentgarn hatte folgende Eigenschaften:

| | |
|---|---|
| Gesamttiter: | 650 dtex |
| Feinheitsfestigkeit: | 6,7 cN/dtex = 938 MPa |
| Bruchdehnung: | 2,1 % |
| | (Zugversuch nach DIN 53 835) |
| Anfangsmodul: | 425 cN/dtex = 59 540 MPa |
| Orientierung: | 0,044 |

Beispiel 1

Eine V2A-Platte der Abmessungen 160 x 160 mm wurde unidirektional gleichmäßig dick mit 160 g des oben beschriebenen Filamentgarns umwickelt. Die umwickelte Platte wurde 20 Minuten lang bei 290 °C einem Druck von 23,4 bar und 10 Minuten lang bei derselben Temperatur einem Druck von 586 bar ausgesetzt. Der erhaltene Formkörper wurde entlang den Plattenkanten aufgeschnitten; man erhielt zwei Polyesterplatten einer Dicke von 2,1 mm. Daraus wurden Zugstäbe längs zur ursprünglichen Faserrichtung entnommen und einem Zugversuch nach DIN 53 455 und DIN 53 457 unterworfen.

Dabei ergaben sich folgende Eigenschaften:

| | |
|---|---|
| Zugfestigkeit : | 872 MPa |
| Bruchdehnung : | 0,8 % |
| Zug-E-Modul : | 58 950 MPa |
| Orientierung : | 0,042 |

Die Fasereigenschaften Zugfestigkeit und Zug-E-Modul ließen sich somit zu über 90 % auf die Platte übertragen.

Beispiel 2

Eine V2A-Platte der Abmessungen 160 x 160 mm wurde kreuzweise (Winkel: 90 °) mit 160 g des oben beschriebenen Filamentgarns bewickelt und, wie in Beispiel 1 beschrieben, gepreßt. Die Zugstäbe wurden jeweils parallel zu den beiden ursprünglichen Faserrichtungen entnommen. Sie hatten folgende Eigenschaften:

| | Richtung 1 | Richtung 2 |
|---|---|---|
| Zugfestigkeit : | 475 MPa | 422 MPa |
| Bruchdehnung: | 0,8 % | 0,9 % |
| Zug-E-Modul: | 29 400 MPa | 27 250 MPa |

Vergleich 1

Aus dem eingangs der Beispiele beschriebenen thermotropen Polyester wurden Zugstäbe mittels Spritzguß hergestellt und nach DIN 53 455 und DIN 53 457 geprüft. Es ergaben sich folgende Werte:

| | |
|---|---|
| Zugfestigkeit : | 152 MPa |
| Bruchdehnung : | 0,7 % |
| Zug-E-Modul : | 21 800 MPa |

Vergleich 2

Aus dem eingangs der Beispiele beschriebenen thermotropen Polyester wurde durch Extrusion durch eine Schlitzdüse eine Folie mit einer Dicke von 1,9 mm hergestellt. Die Zugprüfung an Prüfstäben, die längs und quer zur Extrusionsrichtung entnommen wurden, ergaben folgende Ergebnisse:

|  | längs | quer |
|---|---|---|
| Zugfestigkeit: | 84 MPa | 48 MPa |
| Bruchdehnung: | 0,38 % | 3,0 % |
| Zug-E-Modul: | 17 204 MPa | 2750 MPa |

Beispiel 3

Aus dem oben beschriebenen Filamentgarn wurde ein Gewebe in Leinwandbindung hergestellt. Die Fadenzahl in Kette und Schuß war gleich; das Flächengewicht betrug 200 g/m². 14 Lagen dieses Gewebes wurden kreuzweise übereinandergelegt, 15 Minuten lang bei 160°C mit einem Druck von 500 bar vorkompaktiert und anschließend innerhalb von 5 Minuten bei 260°C/500 bar zu einer 2,0 mm starken Platte verpreßt. Die aus dieser Platte in zwei senkrecht zueinander vorlaufenden Richtungen entnommenen Prüfkörper besaßen folgende Eigenschaften:

|  | Richtung 1 | Richtung 2 |
|---|---|---|
| Zugfestigkeit: | 470 MPa | 465 MPa |
| Bruchdehnung: | 0,7 % | 0,7 % |
| Zug-E-Modul: | 31 500 MPa | 32 800 MPa |

Beispiele 4-8

Aus dem oben beschriebenen Filamentgarn wurde ein Gewebe in Leinwandbindung mit einem Flächengewicht von 200 g/m² hergestellt.

Weiterhin wurde das gleiche Filamentgarn auf eine Länge von 60 mm geschnitten und daraus ein Kreuzlagenvlies mit einem Flächengewicht von 150 g/m² hergestellt.

Sowohl beim Gewebe als auch beim Vlies war die Anzahl der Filamente bzw. Fasern in Längs- und in Querrichtung gleich.

Gewebe und Vlies wurden unter einem Druck von 100 bar bei folgenden Bedingungen verpreßt:

| Beispiel | Flächen-gebilde | Anzahl der Lagen | Temperatur [°C] | Preßzeit [Minuten] |
|---|---|---|---|---|
| 4 | Vlies | 1 | 280 | 2 |
| 5 | Gewebe | 1 | 280 | 2 |
| 6 | Vlies | 2 | 280 | 4 |
| 7 | Gewebe | 3 | 280 | 5 |
| 8 | Gewebe | 10 | 290 | 10 |

Aus den so erhaltenen Folien wurde Probekörper in Längs- und in Querrichtung geschnitten und daran folgenden Eigenschaften ermittelt:

| Bei-spiel | Dicke | Zugfestig-keit | Bruchdehnung | Zug-E-Modul |
|---|---|---|---|---|
| | [mm] | [MPa] | [%] | [MPa] |
| 4 | 0,1 | 425/485 | 1,3/1,3 | 29 700/30 100 |
| 5 | 0,1 | 455/463 | 1,2/1,4 | 29 100/27 900 |
| 6 | 0,2 | 490/460 | 1,1/1,2 | 28 950/28 500 |
| 7 | 0,4 | 448/460 | 0,9/0,9 | 28 500/28 850 |
| 8 | 1,4 | 465/443 | 0,8/0,7 | 28 000/27 500 |

Beispiel 9

Das oben beschriebene Filamentgarn wurde unter einem Stickstoffstrom bei einem Druck von 0,03 bar innerhalb einer Stunde auf 230°C und innerhalb von weiteren 3 Stunden auf 250°C aufgeheizt und 16 Stunden bei 250°C sowie 7 Stunden bei 280°C getempert. Danach wies das Filamentgarn (Schmelzpunkt: 275°C) folgende Eigenschaften auf:

Feinfestigkeit :      18,5 cN/dtex = 2590 MPa
Bruchdehnung :      4 %
Anfangsmodul :      390 cN/dtex = 54 600 MPa

Das getemperte Filamentgarn wurde analog Beispiel 2 weiterverarbeitet und bei 350°C analog Beispiel 1 gepreßt. Die erhaltenen Platten besaßen folgende Eigenschaften:

| | Richtung 1 | Richtung 2 |
|---|---|---|
| Zugfestigkeit : | 1195 MPa | 1210 MPa |
| Bruchdehnung : | 0,9 % | 1,0 % |
| Zug-E-Modul : | 27 500 MPa | 26 900 MPa |

Beispiel 10

Analog Beispiel 3 wurde ein Gewebe hergestellt.

Zwölf Lagen dieses Gewebes wurden übereinandergelegt und vor dem Verpressen analog Beispiel 9 getempert. Anschließend wurde das Material bei 350°C analog Beispiel 1 zu einer Platte verpreßt, die folgende Eigenschaften besaß:

| | Richtung 1 | Richtung 2 |
|---|---|---|
| Zugfestigkeit : | 1150 MPa | 1200 MPa |
| Bruchdehnung : | 1,1 % | 1,3 % |
| Zug-E-Modul : | 27 100 MPa | 27 300 MPa |

**EP 0 201 029 B1**

**Ansprüche**

1. Verfahren zur Herstellung von Folien und Formkörpern, dadurch gekennzeichnet, daß man Fasern oder Filamente aus thermotropen Polymeren zu einem Flächengebilde anordnet und dieses bei Temperaturen von 200-400°C und einem Druck von 1,2 bis 1500 bar aus anisotroper Schmelze kompaktiert, wobei die Verarbeitungszeit so gewählt wird, daß ein homogenes, von inneren Oberflächen freies Produkt entsteht.

2. Verfahren nach Anspruch 1, dadurch gekennzeichnet, daß der Druck 30 bis 1500 bar beträgt.

3. Verfahren nach Ansprüchen 1-2, dadurch gekennzeichnet, daß die Fasern oder Filamente unidirektional zu einem Flächengebilde geordnet werden.

4. Verfahren nach Ansprüchen 1-2, dadurch gekennzeichnet, daß die Fasern oder Filamente kreuzweise (d.h. mit einen Winkel von 90°) zu einem Flächengebilde geordnet werden.

5. Verfahren nach Ansprüchen 1-2, dadurch gekennzeichnet, daß die Fasern oder Filamente in einer Ebene einen Winkel von 30 bis 90° einschließen.

6. Verfahren nach Ansprüchen 1-2, dadurch gekennzeichnet, daß die Fasern oder Filamente in einer Fläche in statistisch verteilten Richtungen vorgelegt werden.

7. Verfahren nach Ansprüchen 1-6, dadurch gekennzeichnet daß die Fasern oder Filamente in Form von Geleger. Geweben und Vliesen verwendet werden.

8. Verfahren nach Ansprüchen 1-6, dadurch gekennzeichnet, daß die Fasern oder Filamente in Form von Maschenware verwendet werden.

9. Verfahren nach Ansprüchen 1-8, dadurch gekennzeichnet, daß bis zu 50 Gew.-% der eingesetzten Fasern oder Filamente aus nicht-thermotropen Thermoplasten, Glas, Aramid, Kohlenstoff oder Metall bestehen.

**Claims**

1. A process for the production of sheets and articles, characterised in that fibres or filaments of thermotropic polymers are arranged in the form of a flat structure and this structure is compacted from an anisotropic melt at temperatures of 200-400°C at a pressure of 1.2 to 1500 bar, the operating time being so chosen that a homogeneous product free from internal surfaces is obtained.

2. A process according to claim 1, characterised in that the pressure is from 30 to 1500 bar.

3. A process according to claims 1-2, characterised in that the fibres or filaments are arranged unidirectionally to form a flat structure.

4. A process according to claims 1-2, characterised in that the fibres or filaments are arranged crosswise (i.e. at an angle of 90°) to form a flat structure.

5. A process according to claims 1-2, characterised in that the fibres or filaments enclose an angle of from 30 to 90° in a plane.

6. A process according to claims 1-2, characterised in that the fibres or filaments are placed down in a surface in randomly distributed directions.

7. A process according to claims 1 - 6, characterised in that the fibres or filaments are used as a flat placement or as woven sheets or non-woven webs.

8. A process according to claims 1-6, characterised in that the fibres or filaments are used in the form of a knitted fabric.

9. A process according to claims 1 - 8, characterised in that up to 50% by weight of the fibres or filaments used consist of non-thermotropic thermoplasts, glass, aramide, carbon or metal.

**Revendications**

1. Procédé de production de feuilles et de pièces moulées, caractérisé en ce qu'on dispose des fibres ou des filaments de polymères thermotropes en un corps plan que l'on compacte à des températures de 200 à 400°C et sous une pression de 1,2 à 1500 bars à partir de la masse fondue anisotrope, le temps de mise en oeuvre étant choisi de manière à obtenir un produit homogène dépourvu de surfaces internes.

2. Procédé suivant la revendication 1, caractérisé en ce que la pression s'élève à 30-1500 bars.

3. Procédé suivant les revendications 1 et 2, caractérisé en ce que les fibres ou les filaments sont ordonnés de façon unidirectionnelle en un corps plan.

4. Procédé suivant les revendications 1 et 2, caractérisé en ce que les fibres ou les filaments sont ordonnés en un corps plan de façon croisée (c'est-à-dire avec un angle de 90°).

5. Procédé suivant les revendications 1 et 2, caractérisé en ce que les fibres ou les filaments forment dans un plan un angle de 30 à 90°.

6. Procédé suivant les revendications 1 et 2, caractérisé en ce que les fibres ou les filaments sont préalablement disposés dans un plan dans des directions réparties de façon statistique.

7. Procédé suivant les revendications 1 à 6, caractérisé en ce que les fibres ou les filaments sont utilisés sous forme de couches, de tissus ou de nappes.

8. Procédé suivant les revendications 1 à 6, caractérisé en ce que les fibres ou les filaments sont utilisés sous forme de tissus à mailles.

9. Procédé suivant les revendications 1 à 8, caractérisé en ce qu'une proportion allant jusqu'à 50 % en poids des fibres ou des filaments utilisés consiste en matières thermoplastiques non thermotropes, en verre, en aramide, en carbone ou en métal.